# EUROPÄISCHE PATENTSCHRIFT

(11) **EP 0 621 415 B1**
(45) Veröffentlichungstag und Bekanntmachung des Hinweises auf die Patenterteilung: **28.05.1997**
(21) Anmeldenummer: 94104364.8
(22) Anmeldetag: 19.03.1994
(51) Int. Cl.: F16D 69/04, F16D 65/092

(54) **Bremsbelag für Scheibenbremsen, insbesondere für Hochgeschwindigkeitszüge**
Lining for disc brakes, particularly for high speed trains
Garniture pour freins à disque, en particulier pour trains à grande vitesse

(30) Priorität: 22.04.1993 DE 9306093 U
(43) Veröffentlichungstag der Anmeldung: 26.10.1994
(73) Patentinhaber: AlliedSignal Bremsbelag GmbH, 21509 Glinde (DE)
(72) Erfinder: Valentin, Wolfgang, Dipl.-Ing., D-21509 Glinde (DE)
(74) Vertreter: Richter, Werdermann & Gerbaulet

(56) Entgegenhaltungen:
- EP-A- 0 106 782
- FR-A- 1 218 486
- FR-A- 1 259 664
- GB-A- 1 180 109
- GB-A- 2 110 327

## Beschreibung

Die Erfindung betrifft einen Bremsbelag für Scheibenbremsen, insbesondere für Hochgeschwindigkeitsschienenfahrzeuge, mit einer ein- oder mehrteiligen Trägerplatte, auf deren der Reibfläche der Bremsscheibe zugewandten Vorderseite einzelne Bremselemente angeordnet sind, wobei mindestens ein Bremselement mit einer Bodenplatte verbunden ist, die wiederum mit der Trägerplatte in Verbindung steht und die das Bremselemant seitlich überragt und/oder Teil eines das Bremselement mantelförmig umhüllenden, zur Vorderseite hin offenen Korbes ist, wobei die auf die Trägerplatte aufgesetzte Bodenplatte des Korbes des Bremselementes an der Trägerplatte mittels einer ersten Verbindung und an ihrer dem Bremselement abgewandten Seite an der Trägerplatte mittels einer zweiten Verbindung befestigt ist, wobei eine der beiden Verbindungen als Schweißverbindung und die andere Verbindung als eine mechanische Verbindung ausgebildet ist.

Einen auf einer metallischen Verstärkungsplatte angeordneten Reibbelag als Reibungsbauteil für Bremsen und Kupplungen beschreibt die FR-A-1 259 664. Bei diesem Reibungsbauteil ist der Reibbelag in einer korbartig ausgebildeten Fassung aus einem gesinterten Metallpulver gehalten. Zusätzlich zu dieser Schweißung oder Lötung der Fassung an der Verstärkungsplatte ist die Fassung mit einem Vorsprung oder mehreren Vorsprüngen versehen, die am Boden der Fassung angeformt sind und aus dem gleichen Material bestehen, aus dem auch die Fassung gefertigt ist. Diese Vorsprünge sind durch Durchbrechungen in der Verstärkungsplatte hindurchgeführt, wobei die freien, aus der Verstärkungsplatte herausragenden Enden der Vorsprünge angestaucht oder genietet sind, um die Fassung mit der Verstärkungsplatte fest zu verbinden. Hiernach ist die Fassung mit dem Reibbelag mittels einer Schweißverbindung und einer zusätzlichen mechanischen Verbindung an der Verstärkungsplatte gehalten. Die Vorsprünge an der Fassung können auch als metallische Niete ausgebildet und bei der Herstellung der Fassung in dessen Material mit eingearbeitet sein.

Derartige Teilbelagscheibenbremsen werden beispielsweise in der DE-U1 85 14 607.2 beschrieben. Die Trägerplatte besitzt hierbei eine Anzahl von Durchbrechungen, durch die Bremselementfortsätze durchgreifen, wobei diese Fortsätze mit einer Tragscheibe verbunden sind, deren Durchmesser größer ist als der Durchmesser der Durchbrechungen. Über eine Tellerfeder, die sich gegen eine Trag- und Führungsplatte abstützt, werden die Bodenplatten gegen die Tragplattenunterseite gedrückt. Die Trägerplatte sowie die Trag- und Führungsplatte werden durch Nieten mit entsprechend hierum angeordneten Abstandsringen abstandsveränderbar gehalten.

Auch in der EP-A-0 106 782 sind auf einer Trägerplatte Durchbrechungen angeordnet, welche von einem Zylinderansatz der Bremselemente durchgriffen werden. Durch eine Preßklemmung sind diese Zylinderelemente an der Trägerplatte befestigt. In der EP-A-0 508 423 werden auf Trägerbleche aufgeschweißte Sinterelemente oder über Zwischenplatten gehaltene Sinterelemente als aufwendig und einer besonderen Sorgfalt bei der Herstellung bedürftig beschrieben. Soweit zur Verbesserung der inneren Stabilität besondere Ummantelungen vorgesehen sind, sei es als Ringe oder Töpfe aus Stahl oder Buntmetallrohr, wird der Nachteil gesehen, daß sie sich während der Verschleißphase aufbördeln und die Sintermasse nicht fest genug halten und so zu Beschädigungen der Bremsflächen oder zu Veränderungen des Reibverhaltens führen. Daher wird vorgeschlagen, die zylinderischen Sinterelemente jeweils mit einem Verstärkungsring zu versehen, welcher auf der Trägerplatte und/oder mit dem Sinterelement, dem Bremselement, fest verbunden ist und dessen Höhe mindestens bis zur Verschleißgrenze geht. Das Material des Verstärkungsringes soll etwa die gleichen Verschleiß- und Reibeigenschaften aufweisen wie ein Sinterelement. Das Sinterelement selbst und der Verstärkungsring sollen mittels Lot auf der Trägerplatte zu einer kraftschlüssigen Verbindung aufgesintert werden. Diese Lösung hat sich in der Praxis als problematisch erwiesen, da beim Betrieb starke Schwingungen auftreten, die schließlich zum Bruch führen. Auch die Befestigung von Bremselementen und/oder deren Bodenplatten durch Schweißen allein hat nicht zur gewünschten Stabilität der Verbindung des Bremselementes an der Trägerplatte geführt.

Es ist daher Aufgabe der vorliegenden Erfindung, die Befestigung des Bremselementes an der Trägerplatte bei einem Bremsbelag der eingangs beschriebenen Art so zu verbessern, daß die bei Betrieb an den Bremsscheiben und den Bremsbelägen auftretenden starken Schwingungen die Festigkeit der Verbindung nicht beeinträchtigen.

Diese Aufgabe wird durch den in den Ansprüchen 1 und 2 beschriebenen Bremsbelag gelöst.

Nach einer ersten Ausführungsform der Erfindung ist bei dem Bremsbelag die Trägerplatte mit einer der Anzahl der Bremselemente entsprechenden Anzahl von zentrisch zu den Bremselementen angeordneten, kreisförmigen Durchbrechung versehen, wobei jede Durchbrechung gegenüber dem Durchmesser des Bremselementes oder seiner Bodenplatte einen kleineren Durchmesser aufweist, und mit der Bodenplatte schutzgasverschweißt ist, wobei die Schweißnaht an dem Innenrand einer jeden Durchbrechung angebracht ist.

Bei einer weiteren Ausführungsform der Erfindung sind die beiden Verbindungen, mittels denen der Korb des Bremselementes an der Trägerplatte befestigt ist, als Schweißverbindungen ausgebildet, von denen die auf die Trägerplatte aufgesetzte Bodenplatte des Korbes sowohl an ihrem Umfangsmantel an mehreren Stellen durch Preßschweißen als auch durch Schutzgasschweißen an ihrer dem Bremselement abgewandten Seite mit der Trägerplatte verbunden ist. Hiernach ist die auf die Trägerplatte aufgesetzte Bodenplatte des Korbes sowohl an ihrem Umfangsmantel an mehreren Stellen durch Preßschweißen als auch durch Schutzgasschweißen an ihrer dem Bremselement abgewandten Seite mit der Trägerplatte verschweißt.

Unter Preßschweißen wird allgemein die Verbindung der aneinanderzufügenden Teile ohne Zusatzwerkstoffe durch Zusammenpressen verstanden. Bevorzugte Sonderformen sind das Widerstandsschweißen, bei dem der elektrische Widerstand in der Schweißzone beim Stromdurchgang die zum Schweißen erforderliche Wärme erzeugt. Die Bindung der Teile - hier der Bodenplatte und der Trägerplatte - aneinander wird durch Druck erzeugt. Eine Sonderform des Widerstandsschweißens ist das Buckelschweißen, bei dem Kupferplatten als Elektroden verwendet werden, die den beiden Werkstückteilen angepaßt sind. Ein Werkstückteil hat mehrere eingedrückte Buckel, mit denen es am anderen Teil anliegt. Diese Berührungspunkte ergeben beim Stromdurchfluß die Schweißstellen. Die Buckel werden durch die Plattenelektroden zusammengedrückt.

Beim Schutzgasschweißen unterscheidet man das Wolfram-Schutzgasschweißen mit einer nicht abschmelzenden Wolfram-Elektrode und das Metall-Schutzgasschweißen, bei dem die Drahtelektrode abschmilzt. In beiden Verfahren werden der Lichtbogen und das Schmelzbad durch das Schutzgas, meist Argon, abgeschirmt. Eine bevorzugte, hier anzuwendende Schweißform ist das Wolfram-Inertgasschweißen.

Bevorzugte Ausführungen der Erfindung sind in den Unteransprüchen beschrieben.

So weist die Trägerplatte nach einer weiteren Ausgestaltung der Erfindung Durchbrechungen mit einem kleineren Durchmesser als dem des Bremselementes auf, wobei der Durchbrechungsinnenmantel mit der Bodenplatte schutzgasverschweißt ist. Die Schutzgasverschweißpungsnaht besitzt vorzugsweise eine geschlossene Kurvenform. Die Widerstandsschweißpunkte an der Mantelseite der Bodenplatte, insbesondere der Grenzfläche zur Trägerplatte hin, sind weiterhin vorzugsweise äquidistant angeordnet.

Die Bodenplatte und/oder der Korbmantel haben bevorzugt eine Blechdicke von 0,5 mm plus/minus 0,1 mm, wobei auch größere Blechstärken zur Anwendung gelangen können.

Die raster- oder gitterförmige Ausbildung oder die dort angeordneten Durchbrechungen haben den Vorteil, daß auch Reibmaterial geringerer Festigkeit verwendet werden kann. Insbesondere beim Buckelschweißen empfiehlt es sich, die Bodenplatte im Bereich der Durchbrechung der Trägerplatte sickenförmig auszubilden.

Ausführungsformen der Erfindung sind in den Zeichnungen dargestellt. Es zeigen
- Fig. 1: eine Draufsicht auf eine Trägerplatte mit mehreren Bremselementen,
- Fig. 2: eine Draufsicht auf eine Trägerplatte in Originalgröße mit einer der Anzahl der aufzunehmenden Bremselemente entsprechenden Anzahl von Durchbrechungen mit in deren Umfangsbereich auf der Trägerplatte ausgebildeten und ringförmig angeordneten buckelartigen Erhebungen,
- Fig. 3: eine teilgeschnittene Seitenansicht durch eine Trägerplatte nach Fig.1,
- Fig. 4 bis 7: Ausschnittsvergrößerungen "Y" gemäß Fig.3 in unterschiedlichen Ausführungen und
- Fig. 8: eine perspektivische Teilansicht einer Trägerplatte mit aufgeschweißtem Bremselement.

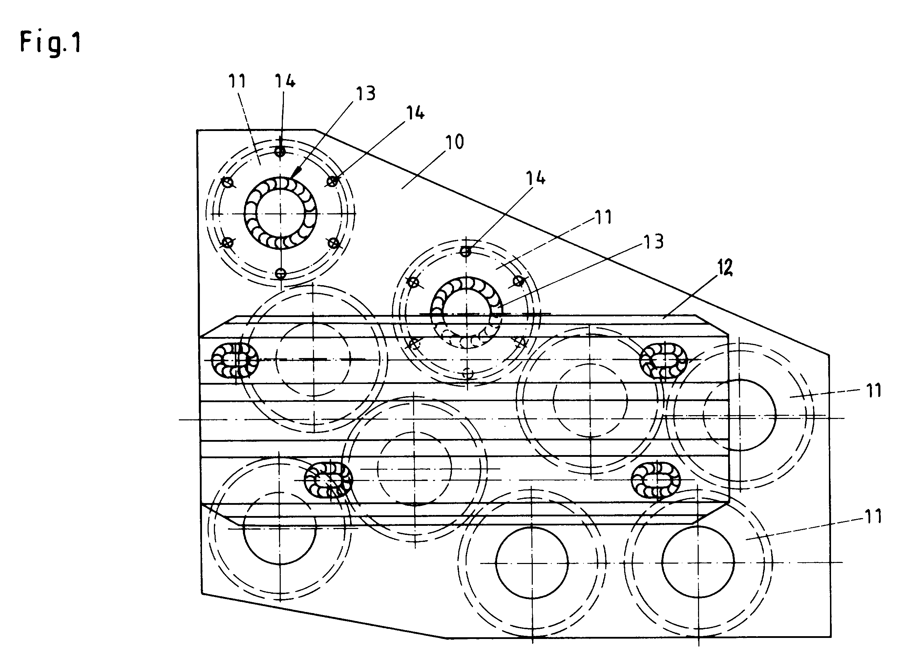

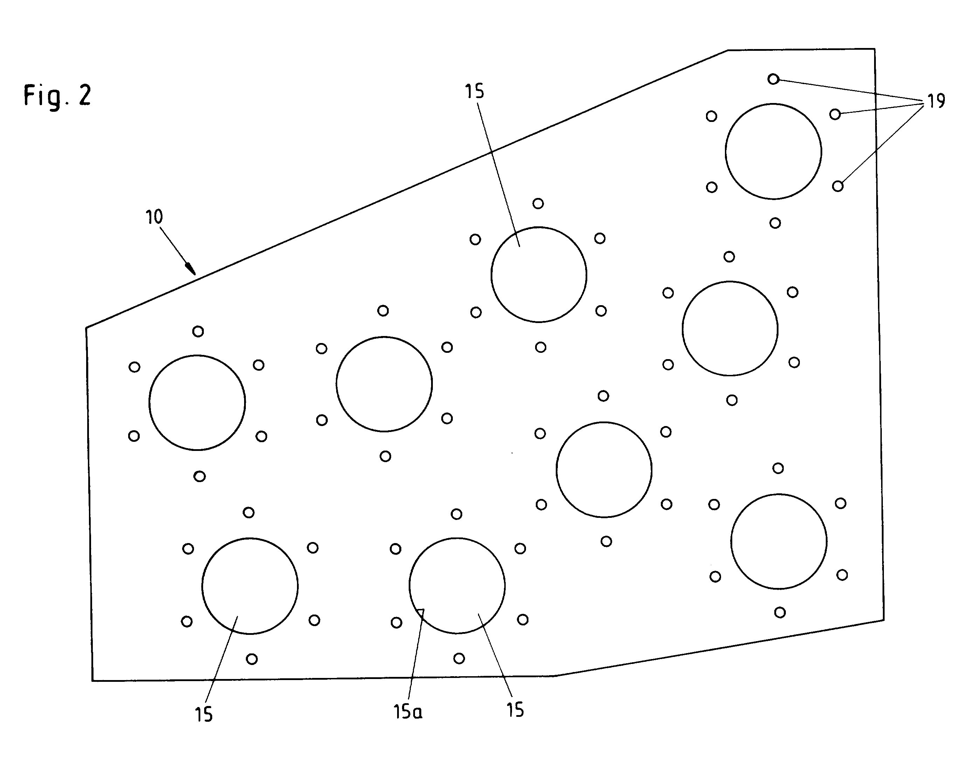

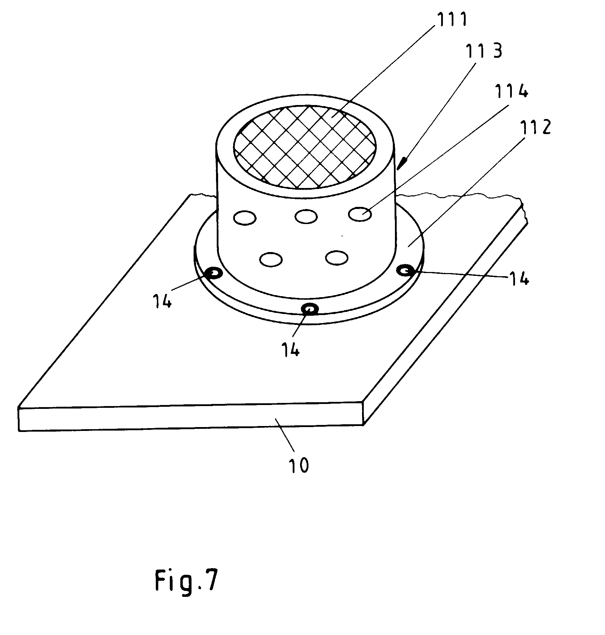

Scheibenbremsen der erfindungsgemäßen Art besitzen ein- oder mehrteilige Trägerplatten 10, auf deren der Reibfläche der (nicht dargestellten) Bremsscheibe zugewandten Vorderseite einzelne Bremselemente 11 angeordnet sind und auf deren Rückseite eine Führung 12 für den Bremsbackenhalter, vorzugsweise eine Schwalbenschwanzführung oder ähnliches vorgesehen ist (Fig.1 und 2). Die vorliegende Trägerplatte 10 weist neun Bremselemente 11 auf, die jeweils aus einem Sinterbremsbelag 111 bestehen und die zumindest an der Unterseite eine Bodenplatte 112 aufweisen (Fig.7). Diese Bodenplatte 112 kann verschiedene Ausgestaltungen aufweisen.

Die Bodenplatte 112 kann auch Teil eines Korbes 113 sein, der den Reibwerkstoff 111 mit Ausnahme der Vorderseite allseitig umhüllt.

Erfindungswesentlich ist, die Bodenplatte 112 mit der Trägerplatte 10 doppelt zu verschweißen, und zwar bodenseitig über eine Schutzgasschweißung, insbesondere eine Wolfram-Inertgasschweißung, als auch ringsum über eine Widerstandspreßschweißung. Wie Fig. 1 zu entnehmen ist, ist die Schutzgasschweißnaht 13 ein geschlossener Ring, während die einzelnen Widerstandspreßschweißpunkte 14 äquidistant oder andersartig an der Bodenplatte 112 angeordnet sind. Die Schutzgasschweißnaht 13 kann auch unterbrochen in Form eines Ringes angebracht sein.

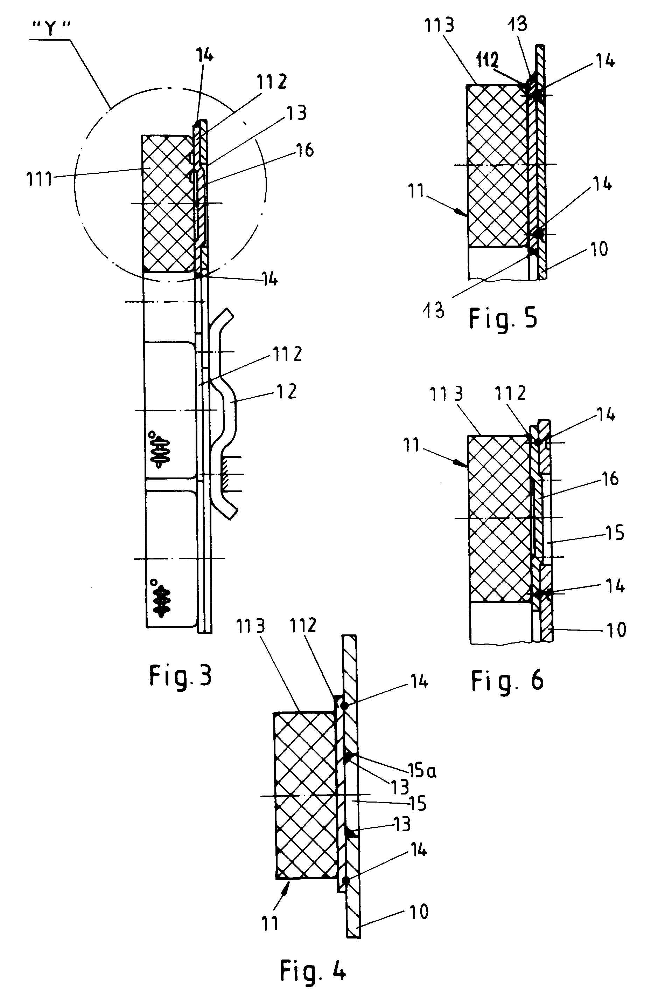

Die Bodenplatte kann auch, wie in Fig. 3 und 6 sowie 7 angedeutet, eine bodenförmige, nach außen gerichtete Sicke 16 aufweisen, die als Ausnehmung in die Durchbrechung 15 der Trägerplatte 10 hineinragt, ohne diese zu durchgreifen. Über die Sicke 16 lassen sich seitlich angreifende Schübe aufnehmen.

Die Trägerplatte 10 ist mit einer der Anzahl der Bremselemente 11 entsprechenden Anzahl von zentrisch zu den Bremselementen angeordneten, kreisförmigen Durchbrechungen 15 versehen (Fig.2). Jede Durchbrechung 15 weist gegenüber dem Durchmesser eines jeden Bremselementes 11 oder seiner Bodenplatte 112 einen kleineren Durchmesser auf. Die Durchbrechungen 15 in der Trägerplatte 10 können neben einer kreisförmigen Form auch eine andere geometrische Ausgestaltung aufweisen. Zweckmäßigerweise weist die Trägerplatte 10 im Bereich einer jeden Durchbrechung 15 eine Anzahl von buckelförmigen Erhebungen 19 auf, die ringförmig um die Durchbrechung 15 angeordnet ist (Fig.2)

Weisen die Körbe 113 an der Rückseite ihrer Bodenplatten 112 kreisförmige Sicken 16 auf, dann ist der Durchmesser der Durchbrechungen 15 etwas größer als der Durchmesser der Sicken 16, so daß die Körbe 113 mit ihren Sicken 16 in die Durchbrechungen 15 der Trägerscheibe 10 einsetzbar sind.

Nach einer bevorzugten Ausführungsform ist die Trägerplatte 10 mit der Bodenplatte 112 des Bremselementes 11 schutzgasverschweißt, wobei die Schweißnaht 13 an der Innenwand 15a einer jeden Durchbrechung 15 angebracht ist (Fig.4).

Des weiteren ist die Trägerplatte 10 mit der Bodenplatte 112 schutzgasverschweißt, wobei die Schweißnaht 13 an dem umlaufenden Rand 112a der Bodenplatte 112 des Bremselementes angebracht ist (Fig.5).

Wie Fig. 5 ferner zu entnehmen ist, kann die Widerstandspreßschweißung auch bodenseitig der Bodenplatte 112 mit der Trägerplatte 10 erfolgen, ohne daß eine Durchbrechung 15 vorgesehen ist. Die Fig. 6 zeigt eine weitere Ausführungsform der Bremselementbefestigung an der Trägerplatte 10.

Die Wand 113a des Korbes 113 ist raster- oder gitterförmig ausgebildet; sie kann auch mit Durchbrechungen versehen sein. Die Bodenplatte 112 und/ oder die Korbmantelwandung 113a haben bevorzugterweise eine Stärke von 0,5 mm plus/minus 0,1 mm, wobei auch größere Blechstärken eingesetzt werden können.

Die auf die Trägerplatte 10 aufgesetzte Bodenplatte 112 des Korbes 113 des Bremselementes 11 ist an der Trägerplatte 10 mittels einer ersten Verbindung 14 und an ihrer dem Bremselement 11 abgewandten Seite an der Trägerplatte 10 mittels einer zweiten Verbindung 13 befestigt. Wobei Verbindung 13, eine Schweißverbindung ist, während es sich bei der anderen Verbindung um eine mechanische Verbindung handeln kann, z.B. durch eine mechanische Verkrallung, wobei auch Löt- und Klebeverbindungen eingesetzt werden können. Bevorzugt wird aber eine Befestigung, bei der die Verbindung 14 eine Preßschweißverbindung und die Verbindung 13 eine Schutzgasschweißverbindung ist.

## Patentansprüche

1. Bremsbelag für Scheibenbremsen, insbesondere für Hochgeschwindigkeitsschienenfahrzeuge, mit einer ein- oder mehrteiligen Trägerplatte (10), auf deren der Reibfläche der Bremsscheibe zugewandten Vorderseite einzelne Bremselemente (11) angeordnet sind, wobei mindestens ein Bremselement (11) mit einer Bodenplatte (112) verbunden ist, die wiederum mit der Trägerplatte (10) in Verbindung steht und die das Bremselemant (11) seitlich überragt und/oder Teil eines das Bremselement (11) mantelförmig umhüllenden, zur Vorderseite hin offenen Korbes (113) ist, wobei die auf die Trägerplatte (10) aufgesetzte Bodenplatte (112) des Korbes (113) des Bremselementes (11) an der Trägerplatte (10) mittels einer ersten Verbindung (14) und an ihrer dem Bremselement (11) abgewandten Seite an der Trägerplatte (10) mittels einer zweiten Verbindung (13) befestigt ist, wobei eine der beiden Verbindungen (13, 14) als Schweißverbindung und die andere Verbindung als eine mechanische Verbindung ausgebildet ist, dadurch gekennzeichnet, daß die Trägerplatte (10), auf deren abgewandten Rückseite eine Befestigung oder Führung (12) für den Bremsbackenhalter vorgesehen ist, mit einer der Anzahl der Bremselemente (11) entsprechenden Anzahl von zentrisch zu dem Bremselementen angeordneten kreisförmigen Durchbrechungen (15) versehen ist, wobei jede Durchbrechung (15) gegenüber dem Durchmesser des Bremselementes (11) oder seiner Bodenplatte (112) einen kleineren Durchmesser aufweist und mit der Bodenplatte (112) schutzgasverschweißt ist, wobei die Schweißnaht (13) an dem Innenrand (15a) einer jeden Durchbrechung (15) angebracht ist.

2. Bremsbelag für Scheibenbremsen, insbesondere für Hochgeschwindigkeitsschienenfahrzeuge, mit einer ein- oder mehrteiligen Trägerplatte (10), auf deren der Reibfläche der Bremsscheibe zugewandten Vorderseite einzelne Bremselemente (11) angeordnet sind, wobei mindestens ein Bremselement (11) mit einer Bodenplatte (112) verbunden ist, die wiederum mit der Trägerplatte (10) in Verbindung steht und die das Bremselement (11) seitlich überragt und/oder Teil eines das Bremselement (11) mantelförmig umhüllenden, zur Vorderseite hin offenen Korbes (113) ist, wobei die auf die Trägerplatte (10) aufgesetzte Bodenplatte (112) des Korbes (113) des Bremselementes (11) an der Trägerplatte (10) mittels einer ersten Verbindung (14) und an ihrer dem Bremselement (11) abgewandten Seite an der Trägerplatte (10) mittels einer zweiten Verbindung (13) befestigt ist, dadurch gekennzeichnet, daß auf der abgewandten Rückseite der Trägerplatte (10) eine Befestigung oder Führung (12) für Bremsbackenhalter vorgesehen ist und daß beide Verbindungen (13,14) als Schweißverbindungen ausgebildet sind, von denen die auf die Trägerplatte (10) aufgesetzte Bodenplatte (112) des Korbes (113) sowohl an ihrem Umfangsmantel an mehreren Stellen durch Preßschweißen (14) als auch durch Schutzgasschweißen (13) an ihrer dem Bremselement (11) abgewandten Seite mit der Trägerplatte (10) verbunden ist.

3. Bremsbelag nach einem der Ansprüche 1 und 2,
dadurch gekennzeichnet,
daß die Trägerplatte (10) mit einer der Anzahl der Bremselemente (11) entsprechenden Anzahl von zentrisch zu den Bremselementen angeordneten kreisförmigen Durchbrechungen (15) versehen ist, wobei jede Durchbrechung (15) gegenüber dem Durchmesser des Bremselementes (11) oder seiner Bodenplatte (112) einen kleineren Durchmesser aufweist und mit der Bodenplatte (112) schutzgasverschweißt ist, wobei die Schweißnaht (13) an dem inneren Rand (15a) einer jeden Durchbrechung (15) angebracht ist.

4. Bremsbelag nach einem der Ansprüche 1 bis 3,
dadurch gekennzeichnet, daß die Trägerplatte (10) im Bereich einer jeden Durchbrechung (15) eine Anzahl von buckelförmigen Erhebungen (19) aufweist, die ringförmig um die Durchbrechung (15) angeordnet ist.

5. Bremsbelag nach einem der Ansprüche 1 bis 4,
dadruch gekennzeichnet, daß die Schutzgasschweißnaht (13) eine geschlossene oder unterbrochene Ringform besitzt und die Preßschweißpunkte (14) zueinander äquidistant angeordnet sind.

6. Bremsbelag nach einem der Ansprüche 1 bis 5,
dadurch gekennzeichnet, daß die Bodenplatte (112) und die Wandung (113a) des Korbes (113) eine Blechdicke von 0,5 mm plus/minus 0,1 mm aufweisen.

7. Bremsbelag nach einem der Ansprüche 1 bis 6,
dadurch gekennzeichnet, daß die Korbemantelwandung (113a) raster- oder gitterförmig ausgebildet oder mit Durchbrechungen (114) versehen ist.

8. Bremsbelag nach einem der Ansprüche 1 bis 7,
dadurch gekennzeichnet, daß die Bodenplatte (112) im Bereich der Durchbrechung (15) der Trägerplatte (10) sickenförmig (16) ausgebildet ist.

## Claims

1. Lining for disc brakes, particularly for high speed trains, with a one-piece or multi-part carrier plate (10), upon whose front facing the friction surface of the brake disc, individual brake elements (11) are disposed, in which case at least one brake element (11) is connected with a bottom plate (112), which, in turn, is connected with the carrier plate (10) and which projects laterally over the brake element and/or forms part of a cage (113) surrounding the brake element (11) in a casing-like fashion and which is open toward the face, in which case the bottom plate (112) of the cage (113) of the brake element (11) placed upon the carrier plate (10), with the aid of a first connection (14) and on the side facing away from the brake element (11), is attached to the carrier plate (10) with the aid of a second connection (13), in which case one of the two connections (13,14) is constructed in the form of a welded connection and the other connection in the form of a mechanical connection,
characterized in that
the carrier plate (10), upon whose opposite rear side an attachment or guiding means (12) for the brake shoe retainer is provided which is fitted with a plurality of circular perforations (15) centrically disposed relative to the brake elements and which corresponds to the number of brake elements (11), in which case each perforation (15), in comparison with the diameter of the brake element (11) or the bottom plate of the same, possesses a smaller diameter and is inert gas welded to the bottom plate (112), while the weld seam (13) is applied to the inner edge (15a) of each perforation (15).

2. Lining for disc brakes, particularly for high speed trains, with a one-piece or multi-part carrier plate (10), upon whose front facing the friction surface of the disc brake, individual brake elements (11) are disposed, in which case at least one brake element (11) is connected with a bottom plate (112), which, in turn, is connected with the carrier plate (10) and projects laterally over the brake element and/or forms part of a cage (113) surrounding the brake element (11) in a casing-like manner and which is open toward the bottom plate (112) of the cage (113) of the brake element (11) placed upon the carrier plate (10), with the aid of a first connection (14) and, on the side facing away from the brake element (11), is attached to the carrier plate (10) with the aid of a second connection (13),
characterized in that,
on the opposite rear side of the carrier plate (10), an attachment or guiding means (12) for the brake shoe retainers is provided and in that both connections (13,14) are constructed in the form of welded connections, of which the botttom plate (112) of the cage (113) placed upon the carrier plate (10), both on its circumferential casing is at several points connected by means of pressure welding (14) as well as by means of inert gas welding (13) on its side facing away from the brake element (11) with the carrier plate (10).

3. Lining according to either Claim 1 or 2,
characterized in that
the carrier plate (10) is provided with a plurality of circular perforations (15) which corresponds to the number of the brake elements and disposed centrically to the brake elements, in which case each perforation (15), in comparison with the diameter of the brake element (11) or the bottom plate (112) of the same, possesses a smaller diameter and is inert gas welded to the bottom plate (112), while the weld seam (13) is applied to the inner edge (15a) of each perforation (15).

4. Lining according to any of Claims 1 to 3,
characterized in that,
the carrier plate 10, within the region of each perforation (15), possesses a plurality of wart-like bumps (19), which is annularly disposed around the perforation (15).

5. Lining according to any of Claims 1 to 4,
characterized in that
the inert gas weld seam (13) possessed a continuous or interrupted annular configuration and in that the pressure weld spots (14) are disposed equidistantly to each other.

6. Lining according to any of Claims 1 to 5,
characterized in that
the bottom plate (112) and the all (113a) of the cage (113) possess a plate thickness of 0.5mm plus/minus 0.1 mm.

7. Lining according to any of Claims 1 to 6,
characterized in that
the cage casing wall (113a) is constructed in a grid or lattice-like form or is provided with perforations (114).

8. Lining according to any of Claims 1 to 7,
characterized in that
the bottom plate (112), within the region of the perforation (15) of the carrier plate (10), is constructed so as to be bead-like.

## Revendications

1. Garniture de frein pour freins à disque, en particulier pour trains à grande vitesse, avec une plaque de support en une ou plusieurs parties (10), sur la face frontale tournée vers la surface de friction du disque de frein de laquelle des éléments de freinage individuels (11) sont placés, au moins un élément de freinage (11) étant relié à une plaque de fond (112) qui est à son tour en relation avec la plaque de support (10) et qui fait saillie latéralement de l'élément de freinage (11) et/ou qui est une partie d'un panier (113) ouvert vers la face frontale qui enveloppe l'élément de freinage (11) en forme d'enveloppe, la plaqué de fond (112) du panier (113) de l'élément de freinage (11), qui est rapportée sur la plaque de support (10), étant fixée r la plaque de support (10) au moyen d'une première fonction (14) et, sur sa face détournée de l'élément de freinage (11) sur la plaque de support (10) au moyen d'une seconde jonction (13), l'une des deux jonctions (13, 14) étant configurée comme un joint soudé et l'autre jonction comme une jonction mécanique, caractérisée en ce que la plaque de support (10), sur le dos détournée de laquelle une fixation ou un guidage (12) pour le support des mâchoires de frein est prévu, est pourvue d'un nombre de découpures (15) circulaires, placées centrées par rapport à l'élément de freinage, qui correspond au nombre des éléments de freinage (11), chaque découpure (15) présentant un diamètre plus petit que le diamètre de l'élément de freinage (11) ou de sa plaque de fond (112) et étant soudée à l'arc sous protection gazeuse à la plaque de fond (112), le cordon de soudure (13) étant placé sur le bord intérieur (15a) de chacune des découpures (15).

2. Garniture de frein pour freins à disque, en particulier pour trains à grande vitesse, avec une plaque de support en une ou plusieurs parties (10), sur la face frontale tournée vers la surface de friction du disque de frein de laquelle des éléments de freinage individuels (11) sont placés, au moins un élément de freinage (11) étant relié à une plaque de fond (112) qui est à son tour en relation avec la plaque de support (10) et qui fait saillie latéralement de l'élément de freinage (11) et/ou qui est une partie d'un panier (113) ouvert vers la face frontale qui enveloppe l'élément de freinage (11) en forme d'enveloppe, la plaque de fond (112) du panier (113) de l'élément de freinage, qui est rapportée sur la plaque de support (10), étant fixée sur la plaque de support (10) au moyen d'une première jonction (14) et, sur sa face détournée de l'élément de freinage (11) sur la plaque de support (10) au moyen d'une seconde jonction (13), caractérisée en ce qu'une fixation ou un guidage (12) pour le support des mâchoires de frein est prévu sur le dos détourné de la plaque de support (10) et que les deux jonctions (13, 14) sont configurées comme des joints soudés parmi lesquels la plaque de fond (112) du panier (113) qui est rapportée sur la plaque de support (10) est reliée à la plaque de support (10) aussi bien sur son enveloppe circonférentielle à plusieurs endroits par soudage par pression (14) que par soudage à l'arc sous protection gazeuse (13) sur sa face détournée de l'élément de freinage (11).

3. Garniture de frein selon l'une des revendications 1 et 2,
caractérisée en ce que la plaque de support (10) est pourvue d'un nombre de découpures (15) circulaires placées centrées par rapport à l'élément de freinage qui correspond au nombre des éléments de freinage (11), chaque découpure (15) présentant un diamètre plus petit que le diamètre de l'élément de freinage (11) ou de sa plaque de fond (112) et étant soudée à l'arc sous protection gazeuse à la plaque de fond (112), le cordon de soudure (13) étant placé sur le bord intérieur (15a) de chacune des découpures (15).

4. Garniture de frein selon l'une des revendications 1 à 3, caractérisée en ce que la plaque de support (10) présente, dans la zone de chacune des découpures (15), un nombre de rehaussements en forme de bosses (19) qui sont placées en forme d'anneau autour de la découpure (15).

5. Garniture de frein selon l'une des revendications 1 à 4, caractérisée en ce que le cordon de soudure soudé à l'arc sous protection gazeuse (13) possède une forme d'anneau fermé ou interrompu et les points de soudage par pression (14) sont placés équidistants l'un par rapport à l'autre.

6. Garniture de frein selon l'une des revendications 1 à 5, caractérisée en ce que la plaque de fond (112) et la paroi (113a) du panier (113) présentent une épaisseur de tôle de 0,5 mm plus ou moins 0,1 mm.

7. Garniture de frein selon l'une des revendications 1 à 6, caractérisée en ce que la paroi de l'enveloppe du panier (113a) est configurée en forme de trame ou de grille ou est pourvue de découpures (114).

8. Garniture de frein selon l'une des revendications 1 à 7, caractérisée en ce que la plaque de fond (112) est configurée dans la zone de la découpure (15) de la plaque de support (10) en forme de moulure (16).
